# EUROPÄISCHE PATENTSCHRIFT

(11) **EP 2 292 957 B1**
(45) Veröffentlichungstag und Bekanntmachung des Hinweises auf die Patenterteilung: **14.11.2012**
(21) Anmeldenummer: 09011379.6
(22) Anmeldetag: 04.09.2009
(51) Int. Cl.: F16K 35/00, F16K 35/02, G05G 5/08, G05G 1/10, G05G 5/06

(54) **Hebeleinrichtung und Hydraulikventil mit einer solchen Hebeleinrichtung**
Lever device and hydraulic valve with same
Dispositif de levier et soupape hydraulique dotée d'un tel dispositif de levier

(43) Veröffentlichungstag der Anmeldung: 09.03.2011
(73) Patentinhaber: Dura Automotive Systems GmbH, 40549 Düsseldorf (DE)
(72) Erfinder: Mathar, Jochen, 54576 Hillesheim (DE)
(74) Vertreter: Paul, Dieter-Alfred

(56) Entgegenhaltungen:
- WO-A-02/091963
- WO-A-2008/016256
- DE-C- 604 802
- FR-A- 527 679
- GB-A- 243 847

## Beschreibung

Die vorliegende Erfindung betrifft eine Hebeleinrichtung für die Betätigung insbesondere eines Hydraulikventils, mit einer Betätigungswelle für den Anschluss an das Hydraulikventil und einem mit der Betätigungswelle verbundenen Betätigungshebel, durch dessen Handhabung die Betätigungswelle verdrehbar ist, sowie mit einer Arretiereinrichtung zur Festlegung der Betätigungswelle in mehreren Arretierpositionen, wobei die Arretiereinrichtung ein mit der Betätigungswelle und/oder dem Betätigungshebel verbundenes Eingriffsteil und ein drehbar gelagertes Arretierteil aufweist und Eingriffs- und Arretierteil zueinander komplementäre Eingriffselemente haben, wobei das Eingriffselement des Arretierteils aus einer Freigabestellung außerhalb des Bewegungsbereichs des Eingriffsteils in eine Eingriffsstellung bringbar ist, in der die Eingriffselemente von Eingriffsteil und Arretierteil formschlüssig und die Betätigungswelle blockierend ineinandergreifen, wobei das Eingriffselement am Arretierteil derart angebracht ist, dass es durch Drehbewegung des Arretierteils aus der Freigabestellung in die Eingriffsstellung verschwenkbar ist. Außerdem betrifft die Erfindung ein Hydraulikventil mit einer solchen Hebeleinrichtung.

Hebeleinrichtungen der oben genannten Art werden insbesondere in Landmaschinen und Traktoren verwendet, um Hydraulikventile für die Handhabung eines an dem Traktor vorgesehenen Arbeitsgeräts, z.B. eines Pflugs, zu betätigen. Dazu wird über den Betätigungshebel die Betätigungswelle verdreht, so dass über das Hydraulikventil ein Absenken bzw. Anheben des Pflugs bewirkt. Aus Sicherheitsgründen ist dabei erforderlich, dass ein unbeabsichtigtes Verdrehen der Betätigungswelle z.B. durch Vibrationen vermieden wird. Dazu sind Arretiereinrichtungen bekannt, mit denen die Betätigungswelle in wenigstens einer, meist mehreren Arretierposition sicher gehalten wird.

Eine bekannte Arretiereinrichtung umfasst einen mit einem Gewinde drehbar gehaltenen Schraubbolzen als Arretierteil, der in der Arretierposition in eine korrespondierende Aussparung eines Eingriffsteils, das mit der Betätigungswelle verbunden ist, einschraubbar ist. Nachteilig ist, dass das Arretieren der Betätigungswelle zeitaufwendig und die Herstellung der Arretiereinrichtung teuer ist.

In der DE-A-604 802 ist ein Gashahn offenbart, der mit einer Hebeleinrichtung zu dessen Betätigung versehen ist. Die Hebeleinrichtung weist eine Betätigungswelle und einen mit der Betätigungswelle gekoppelten Betätigungshebel auf, durch dessen Handhabung die Betätigungswelle verdrehbar ist. Ferner hat die Hebeleinrichtung eine Arretiereinrichtung zur Festlegung der Betätigungswelle in einer Arretierposition. Hierzu hat die Arretiereinrichtung ein mit der Betätigungswelle bzw. dem Betätigungshebel verbundenes Eingriffsteil und ein Arretierteil, wobei Eingriffs- und Arretierteil zueinander komplementäre Eingriffselemente haben. Das Eingriffselement des Arretierteils ist aus einer Freigabestellung in eine Eingriffsstellung bringbar, in der die Eingriffselemente von Eingriffsteil und Arretierteil formschlüssig und die Betätigungswelle blockierend ineinandergreifen.

Nachteilig bei dieser Hebeleinrichtung ist, dass der Betätigungshebel axial heruntergedrückt werden muss, damit Eingriffsteil und Arretierteil ineinandergreifen können. Dies ist nicht nur mechanisch aufwendig, sondern auch in der Betätigung umständlich.

In der FR-A-527 679 ist eine Hebeleinrichtung für die Betätigung eines Ventils offenbart, wobei die Hebeleinrichtung eine Betätigungswelle und ein Betätigungshebel aufweist. Mit dem Betätigungshebel verbunden ist eine Arretiereinrichtung zur Festlegung der Betätigungswelle in mehreren Arretierpositionen. Die Arretiereinrichtung weist eine mit dem Betätigungshebel verbundene Scheibe auf, die über ihrem Umfang Eingriffselemente aufweist. Dem zugeordnet ist ein Federhebel, der ein komplementäres Eingriffselement hat. Der Federhebel kann aus einer Blockierstellung in eine Freigabestellung gebogen werden, so dass dann die Betätigungswelle verdrehbar ist. Die Bedienung der Hebeleinrichtung ist umständlich, weil dafür zwei Hände notwendig sind.

In der GB-A-243 847 ist ein Ventil offenbart, das mit einer Hebeleinrichtung zu dessen Betätigung versehen ist.

Zusätzlich ist eine Arretiereinrichtung mit einem schwenkbaren Hebel als Arretierteil vorgesehen, die es erlaubt, dass das Ventil in einer Arretierposition festgelegt werden kann.

Aufgabe der vorliegenden Erfindung ist es daher, eine Hebeleinrichtung der oben genannten Art bereitzustellen, die einfach zu betätigen ist und einen einfachen Aufbau aufweist.

Diese Aufgabe ist erfindungsgemäß dadurch gelöst, dass das Arretierteil als in axialer Richtung unbeweglich gelagerte Welle ausgebildet ist, die an ihrem dem Eingriffselement entgegengesetzten Bereich einen Drehgriff aufweist, und dass das Eingriffselement an dem eingriffsteilseitigen Endbereich der Welle vorgesehen ist, wobei die Welle derart positioniert ist, dass ihre Längsachse im Wesentlichen senkrecht zur Achse der Betätigungswelle verläuft.

Grundgedanke der Erfindung ist es also, das Eingriffselement bzw. die Eingriffselemente des Arretierteils durch eine kurze Drehung des Arretierteils, beispielsweise eine Vierteldrehung, von der Eingriffsstellung in die Freigabestellung zu überführen oder umgekehrt. Dabei erfolgt ein Verschwenken des Eingriffselements bzw. der Eingriffselemente, so dass es bzw, sie in der Eingriffsstellung ein Eingriffselement des Eingriffsteils durch formschlüssiges Ineinandergreifen blockiert. Die Blockierung des Eingriffselements des Eingriffsteils bewirkt die Arretierung der Betätigungswelle, wobei das Arretierteil die Betätigungswelle in einem radialen Bereich blockiert, so dass der resultierende Hebel kurz ist und nur kleine Kräfte darauf einwirken.

Da das Eingriffselement des Arretierteils an dessen eingriffsteilseitigen Endbereich vorgesehen ist, kann das Arretierteil kurz gehalten werden. Da das Arretierteil an seinem dem Eingriffselement entgegengesetzten Endbereich einen Drehgriff aufweist, kann man das Arretierteil manuell drehen. Der Drehgriff kann auch als Hebel ausgeführt sein, um das Einleiten großer Drehkräfte in das Arretierteil zu ermöglichen.

In Ausgestaltung der Erfindung ist vorgesehen, dass das Eingriffselement des Arretierteils als zwei beabstandete Vorsprünge ausgebildet sein, zwischen denen das bzw. die Eingriffselement(e) am Eingriffsteil in der Freigabestellung des Arretierteils passieren kann bzw. können. Die zwei beabstandeten Vorsprünge schließen zwischen sich eine Nut ein, die in der Freigabeposition in der Bewegungsrichtung des oder der Eingriffselementes/e des Eingriffsteils ausgerichtet ist, wohingegen die beiden Vorsprünge in der Eingriffsstellung das Eingriffselement am Eingriffsteil in Bewegungsrichtung beidseitig einfassen und blockieren.

Eine besonders einfache Ausgestaltung des oder der Eingriffselements/e des Eingriffsteils ergibt sich, wenn diese(s) als Vorsprung bzw. Vorsprünge ausgebildet ist bzw. sind. Auch kann sich das bzw. können sich die Eingriffselement(e) des Eingriffsteils im Wesentlichen radial zu der Betätigungswelle erstrecken. Dadurch kann der Eingriff mit dem Eingriffselement des Arretierteils zuverlässig herbeigeführt werden, und es ergibt sich eine sichere Blockierung der Betätigungswelle.

In weiterer Ausgestaltung der Erfindung kann das Eingriffsteil eine Mehrzahl von Eingriffselementen aufweisen, wobei jedes Eingriffselement des Eingriffsteils mit dem Eingriffselement des Arretierteils in Eingriff bringbar ist. Abhängig von der Verwendung der Hebeleinrichtung kann somit eine Arretierung in den verschiedenen Arretierpositionen erfolgen. Eine besonders einfache Anordnung ergibt sich für die Eingriffselemente des Eingriffsteils, wenn diese auf einer gemeinsamen Kreisbahn um die Betätigungswelle angeordnet sind. Somit können die Eingriffselemente des Eingriffsteils durch ein Verdrehen der Betätigungswelle in den Eingriffsbereich des Arretierteils gelangen und die Betätigungswelle auf einfache Weise durch Ineinandergreifen der Eingriffselemente von Arretierteil und Eingriffsteil in den verschiedenen Arretierpositionen blockieren.

Weiterhin kann das Eingriffsteil als Kreissegmentscheibe ausgeführt und derart positioniert sein, dass ihr Kreismittelpunkt auf der Längsachse der Betätigungswelle liegt. Dadurch können an dem Eingriffsteil Eingriffselemente angebracht werden, die sich beim Drehen der Betätigungswelle auf einer Kreisbahn um deren Mittelachse drehen und jeweils an einer vorgegebenen Position mit dem Eingriffselement des Arretierteils ineinandergreifbar sind. Insbesondere kann das bzw. können die Eingriffselement(e) des Eingriffsteils am äußeren Rand der Kreissegmentscheibe vorgesehen sein, um eine günstige Hebelwirkung durch den vollen Radius der Kreissegmentscheibe zu erzielen. Weiterhin kann die Kreissegmentscheibe derart positioniert sein, dass ihre Scheibenebene senkrecht zu der Längsachse der Betätigungswelle ausgerichtet ist. Dies ermöglicht eine einfache Herstellung und Montage der Kreissegmentscheibe und die Herstellung einer stabilen Verbindung mit der Betätigungswelle.

Schließlich kann das Eingriffsteil an dem Betätigungshebel angebracht sein. Dadurch ist nur der Betätigungshebel mit der Betätigungswelle zu verbinden und der Aufbau der Hebeleinrichtung ist einfach. Da von der Arretiereinrichtung und dem Betätigungshebel prinzipiell gleichgroße Kräfte auf die Betätigungswelle einwirken können, erfordern sie eine gleichermaßen stabile Verbindung damit. Drehfeste Verbindungen sind auf einer Welle jedoch schwierig herzustellen und bei der Anbringung des Eingriffsteils an dem Betätigungshebel kann eine dieser Verbindungen entfallen. Außerdem kann das Eingriffsteil über einen großen axialen Abschnitt mit dem Betätigungshebel verbunden sein, so dass einwirkende Kräfte auf diesen gesamten Abschnitt verteilt werden und die Verbindung zwischen Eingriffsteil und Betätigungshebel stabil herzustellen ist. Zusätzlich kann das Eingriffsteil auch mit der Betätigungswelle verbunden sein, um die Stabilität der Verbindung zu erhöhen.

Gegenstand der vorliegenden Erfindung ist ferner ein Hydraulikventil mit einer erfindungsgemäßen Hebeleinrichtung.

Hinsichtlich weiterer Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigen:
- Figur 1: eine perspektivische Ansicht der Hebeleinrich- tung von seitlich unten bei geöffnetem Gehäuse,
- Figur 2: eine perspektivische Darstellung der Hebelein- richtung aus Figur 1 von seitlich oben,
- Figur 3: eine perspektivische Ansicht der Hebeleinrich- tung aus Figur 1, bei der Arretierteil in der Eingriffsstellung ist, und
- Figur 4: eine perspektivische Darstellung der Hebelein- richtung aus Figur 3 von seitlich oben.

Die in den Figuren gezeigte Hebeleinrichtung 1 umfasst eine Betätigungswelle 2 für den Anschluss an ein nicht gezeigtes Hydraulikventil und einen drehfest mit der Betätigungswelle 2 verbundenen Betätigungshebel 3.

Die Hebeleinrichtung 1 umfasst weiterhin eine Arretiereinrichtung 4 mit einem Eingriffsteil 5, das an einer seiner seitlichen Kanten an dem Betätigungshebel 3 und zusätzlich an seinem unteren Ende an der Betätigungswelle 2 befestigt ist, und einem Arretierteil 6, das in einem Gehäuse 7, welches den zentralen Bereich der Hebeleinrichtung 1 umgibt, gehalten ist. Dabei ist in allen Figuren die dem Betrachter zugewandte Wandung des Gehäuses 7 weggelassen, damit die Hebeleinrichtung 1 sichtbar ist. Das Eingriffsteil 5 ist als Kreissegmentscheibe ausgeführt, deren Kreismittelpunkt auf der Längsachse der Betätigungswelle 2 liegt und deren Scheibenebene senkrecht zu der Längsachse der Betätigungswelle 2 ausgerichtet ist. Als Eingriffselemente sind am äußeren Rand der Kreissegmentscheibe 5 vier Zapfen - beispielhaft mit 8 bezeichnet - vorgesehen, die in Umfangsrichtung beabstandet auf einer gemeinsamen Kreisbahn um die Betätigungswelle 2 liegen und sich von dem Kreismittelpunkt radial nach außen erstrecken.

Das Arretierteil 6 umfasst eine Welle 9, die an einem Lagerelement 10 und einem Durchtritt 11 des Arretierteils 6 durch das Gehäuse 7 drehbar, jedoch axial unverschieblich gelagert ist. Das Arretierteil 6 ist derart positioniert, dass seine Längsachse im Wesentlichen senkrecht zur Achse der Betätigungswelle 2 verläuft.

An dem eingriffsteilseitigen Endbereich der Welle 9 ist ein Eingriffselement 12 mit zwei im Wesentlichen parallel zur Längsachse der Welle 9 liegenden exzentrischen Vorsprüngen 13, 14 ausgebildet, die beabstandet sind und zwischen sich eine Nut freilassen. An seinem den Vorsprüngen 13, 14 entgegengesetzten Endbereich weist das Arretierteil 6 einen Drehgriff 15 auf, mit dem das Arretierteil 6 um seine Längsachse manuell drehbar ist.

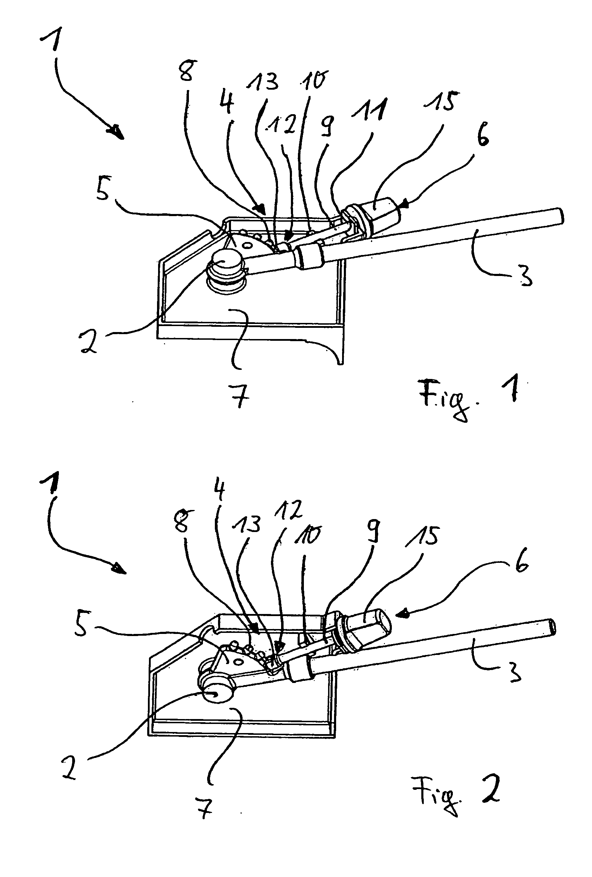

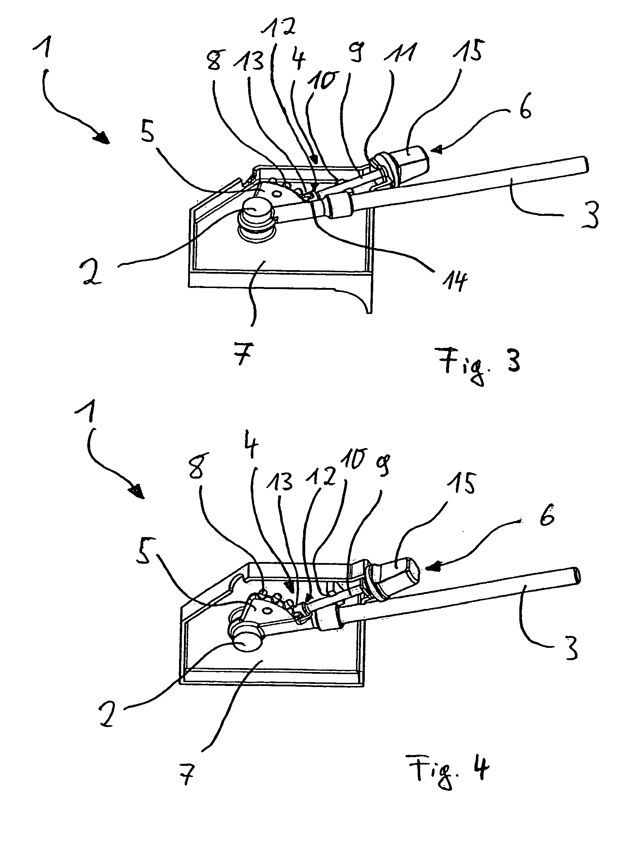

Das Arretierteil 6 wird durch Drehen über den Drehgriff 15 zwischen einer Freigabestellung, die in den Figuren 1 und 2 gezeigt ist, und einer Eingriffsstellung, die in den Figuren 3 und 4 gezeigt ist, bewegt werden. Die beiden Stellungen sind durch einen Drehwinkel von 90° getrennt.

In der Freigabestellung sind die Vorsprünge 13, 14 parallel zu der Ebene der Kreisbahn der Zapfen 8 ausgerichtet. Die Kreisbahnebene korrespondiert mit der zwischen den Vorsprüngen 13, 14 gebildeten Nut, so dass die Zapfen 8 beim Betätigen der Betätigungswelle 2 über den Betätigungshebel 3 zwischen den Vorsprüngen 13, 14 frei passieren können. In Arretierpositionen, in der jeweils ein Zapfen 8 zwischen den Vorsprüngen 13, 14 positioniert ist, kann die Betätigungswelle 2 durch Verdrehen des Arretierteils 6 um 90° in die Eingriffsstellung blockiert werden. In der Eingriffsstellung sind die Vorsprünge 13, 14 in eine Position in der Kreisbahn der Zapfen 8 verschwenkt, so das sie den in der Arretierposition positionierten Zapfen 8 einfassen und blockieren. Der so gebildete formschlüssige Eingriff bewirkt ein Blockieren der Betätigungswelle 2.

Um über das Hydraulikventil eine gewünschte hydraulische Betätigung durchzuführen ist jeweils eine Betätigung wie oben beschrieben durchzuführen. Dabei entspricht jede Arretierposition einer möglichen hydraulischen Betätigung. Um die hydraulische Betätigung zu verändern wird zunächst die Arretiereinrichtung 4 durch Drehen des Arretierteils 6 aus der Eingriffsstellung in die Freigabestellung überführt. Dadurch wird die Blockade der Betätigungswelle 2 aufgehoben, so dass sie über den Betätigungshebel 3 in eine andere Arretierposition gedreht werden kann, die mit der gewünschten hydraulischen Betätigung korrespondiert. In dieser Position wird die Betätigungswelle 2 durch Drehen des Arretierteils 6 in seine Eingriffsstellung erneut blockiert.

## Patentansprüche

1. Hebeleinrichtung (1) für die Betätigung insbesondere eines Hydraulikventils, mit einer Betätigungswelle (2) für den Anschluss an das Hydraulikventil und einem mit der Betätigungswelle (2) verbundenen Betätigungshebel (3), durch dessen Handhabung die Betätigungswelle (2) verdrehbar ist, sowie mit einer Arretiereinrichtung (4) zur Festlegung der Betätigungswelle (2) in mehreren Arretierpositionen, wobei die Arretiereinrichtung (4) ein mit der Betätigungswelle (2) und/oder dem Betätigungshebel (3) verbundenes Eingriffsteil (5) und ein drehbar gelagertes Arretierteil (6) aufweist und Eingriffs- (5) und Arretierteil (6) zueinander komplementäre Eingriffselemente (8, 12) haben, wobei das Eingriffselement (12) des Arretierteils (6) aus einer Freigabestellung außerhalb des Bewegungsbereichs des Eingriffsteils (5) in eine Eingriffsstellung bringbar ist, in der die Eingriffselemente (8, 12) von Eingriffsteil (5) und Arretierteil (6) formschlüssig und die Betätigungswelle (2) blockierend ineinandergreifen, wobei das Eingriffselement (12) am Arretierteil (6) derart angebracht ist, dass es durch Drehbewegung des Arretierteils (6) aus der Freigabestellung in die Eingriffsstellung verschwenkbar ist, **dadurch gekennzeichnet, dass** das Arretierteil (6) als in axialer Richtung unbeweglich gelagerte Welle (9) ausgebildet ist, die an ihrem dem Eingriffselement (12) entgegengesetzten Bereich einen Drehgriff (15) aufweist, und dass das Eingriffselement (12) an dem eingriffsteilseitigen Endbereich der Welle (9) vorgesehen ist, wobei die Welle (9) derart positioniert ist, dass ihre Längsachse im Wesentlichen senkrecht zur Achse der Betätigungswelle (2) verläuft.

2. Hebeleinrichtung (1) nach Anspruch 1, **dadurch gekennzeichnet, dass** das Eingriffselement (12) des Arretierteils (6) als zwei beabstandete Vorsprünge (13, 14) ausgebildet ist, zwischen denen das bzw. die Eingriffselement (e) (8) am Eingriffsteil (5) in der Freigabestellung des Arretierteils (6) passieren kann.

3. Hebeleinrichtung (1) nach einem der vorhergehenden Ansprüche, **dadurch gekennzeichnet, dass** das bzw. die Eingriffselement(e) (8) des Eingriffsteils (5) als Vorsprung bzw. Vorsprünge ausgebildet ist bzw. sind.

4. Hebeleinrichtung (1) nach einem der vorhergehenden Ansprüche, **dadurch gekennzeichnet, dass** das bzw. die Eingriffselement(e) (8) des Eingriffsteils (5) sich im Wesentlichen radial zu der Betätigungswelle (2) erstreckt bzw. erstrecken.

5. Hebeleinrichtung (1) nach einem der vorhergehenden Ansprüche, **dadurch gekennzeichnet, dass** das Eingriffsteil (5) eine Mehrzahl Eingriffselemente (8) aufweist, wobei jedes Eingriffselement (8) des Eingriffsteils (5) mit dem Eingriffselement (12) des Arretierteils (6) in Eingriff bringbar ist.

6. Hebeleinrichtung (1) nach Anspruch 5, **dadurch gekennzeichnet, dass** die Eingriffselemente (8) des Eingriffsteils (5) auf einer gemeinsamen Kreisbahn um die Betätigungswelle (2) angeordnet sind.

7. Hebeleinrichtung (1) nach einem der vorhergehenden Ansprüche, **dadurch gekennzeichnet, dass** das Eingriffsteil (5) als Kreissegmentscheibe ausgeführt und derart positioniert ist, dass ihr Kreismittelpunkt auf der Längsachse der Betätigungswelle (2) liegt.

8. Hebeleinrichtung (1) nach Anspruch 7, **dadurch gekennzeichnet, dass** das bzw. die Eingriffselement(e) (8) des Eingriffsteils (5) am äußeren Rand der Kreissegmentscheibe vorgesehen ist bzw. sind.

9. Hebeleinrichtung (1) nach Anspruch 7 oder 8, **dadurch gekennzeichnet, dass** die Kreissegmentscheibe (5) derart positioniert ist, dass ihre Scheibenebene senkrecht zu der Längsachse der Betätigungswelle (2) ausgerichtet ist.

10. Hebeleinrichtung (1) nach einem der vorhergehenden Ansprüche, **dadurch gekennzeichnet, dass** das Eingriffsteil (5) an dem Betätigungshebel (3) angebracht ist.

11. Hydraulikventil mit einer Hebeleinrichtung (1) für die Betätigung des Hydraulikventils, **dadurch gekennzeichnet, dass** die Hebeleinrichtung (1) nach einem der vorhergehenden Ansprüche ausgebildet ist.

## Claims

1. A lever device (1) for actuating in particular a hydraulic valve, comprising an actuation shaft (2) for the connection to the hydraulic valve and an actuation lever (3) connected to the actuation shaft (2) by manipulation of which the actuation shaft (2) can be rotated, and comprising a locking device (4) for fixing the actuation shaft (2) in a number of locking positions, the locking device (4) having an engagement part (5) connected to the actuation shaft (2) and/or the actuation lever (3) and a rotatably mounted locking part (6) and the engagement (5) and the locking part (6) having engagement elements (8, 12) that are complementary to one another, the engagement element (12) of the locking part (6) being able to be brought from a release position outside of the range of movement of the engagement part (5) into an engagement position in which the engagement elements (8, 12) of the engagement part (5) and the locking part (6) engage with one another with form fit, blocking the actuation shaft (2), the engagement element (12) being attached to the locking part (6) such that it can be pivoted by the rotational movement of the locking part (6) out of the release position into the engagement position, **characterised in that** the locking part (6) is in the form of a shaft (9) mounted such as to be unmoveable in the axial direction, and which has on its region opposite the engagement element (12) a turning handle (15), and that the engagement element (12) is provided on the end region of the shaft (9) on the side of the engagement part, the shaft (9) being positioned such that its longitudinal axis extends substantially perpendicular to the axis of the actuation shaft (2).

2. The lever device (1) according to Claim 1, **characterised in that** the engagement element (12) of the locking part (6) is in the form of two projections (13, 14) spaced apart from one another and between which the engagement element(s) (8) can pass on the engagement part (5) in the release position of the locking part (6).

3. The lever device (1) according to any of the preceding claims, **characterised in that** the engagement element(s) (8) of the engagement part (5) is or are in the form of a projection or projections.

4. The lever device (1) according to any of the preceding claims, **characterised in that** the engagement element(s) (8) of the engagement part (5) extend(s) substantially radially to the actuation shaft (2).

5. The lever device (1) according to any of the preceding claims, **characterised in that** the engagement part (5) has a plurality of engagement elements (8), each engagement element (8) of the engagement part (5) being engageable with the engagement element (12) of the locking part (6).

6. The lever device (1) according to Claim 5, **characterised in that** the engagement elements (8) of the engagement part (5) are arranged over a common circular path around the actuation shaft (2).

7. The lever device (1) according to any of the preceding claims, **characterised in that** the engagement part (5) is made as a circle segment disc and is positioned such that its circle centre point lies on the longitudinal axis of the actuation shaft (2).

8. The lever device (1) according to Claim 7, **characterised in that** the engagement element(s) (8) of the engagement part (5) is or are provided on the outer edge of the circle segment disc.

9. The lever device (1) according to Claim 7 or 8, **characterised in that** the circle segment disc (5) is positioned such that its disc plane is aligned perpendicularly to the longitudinal axis of the actuation shaft (2).

10. The lever device (1) according to any of the preceding claims, **characterised in that** the engagement part (5) is attached to the actuation lever (3).

11. A hydraulic valve comprising a lever device (1) for the actuation of the hydraulic valve, **characterised in that** the lever device (1) is formed according to any of the preceding claims.

## Revendications

1. Dispositif de levier (1) pour l'actionnement notamment d'une vanne hydraulique, avec un arbre d'actionnement (2) pour le raccordement à la vanne hydraulique et un levier d'actionnement (3) relié à l'arbre d'actionnement (2) dont la manipulation permet de faire pivoter l'arbre d'actionnement (2), et avec un dispositif de blocage (4) pour fixer l'arbre d'actionnement (2) dans plusieurs positions de blocage, sachant que le dispositif de blocage (4) présente une pièce de couplage (5) reliée à l'arbre d'actionnement (2) et/ou au levier d'actionnement (3) et une pièce de blocage (6) placée de manière à être orientée et pièce de couplage (5) et pièce de blocage (6) ont des éléments de couplage (8, 12) complémentaires les uns par rapport aux autres, sachant que l'élément de couplage (12) de la pièce de blocage (6) peut être mis dans une position de couplage à partir d'une position de déblocage à l'extérieur de la zone de mouvement de la pièce de couplage (5), dans laquelle les éléments de couplage (8, 12) de la pièce de couplage (5) et pièce de blocage (6) s'imbriquent par liaison de forme et l'arbre d'actionnement (2) par blocage, sachant que l'élément de couplage (12) sur la pièce de blocage (6) est mise de telle manière qu'il peut être basculé par mouvement de rotation de la pièce de blocage (6) de la position de déblocage dans la position de couplage, **caractérisé en ce que** la pièce de blocage (6) est formée en tant qu'arbre (9) logé de manière inamovible dans le sens axial, qui présente une poignée tournante (15) sur sa zone opposée à l'élément de couplage (12) et que l'élément de couplage (12) est prévu sur l'extrémité de l'arbre (9) côté pièce de couplage, sachant que l'arbre (9) est positionné de manière à ce que son axe longitudinal s'étende essentiellement verticalement par rapport à l'axe de l'arbre d'actionnement (2).

2. Dispositif de levier (1) selon revendication 1, **caractérisé en ce que** l'élément de couplage (12) de la pièce de blocage (6) est formé en tant que deux avancées (13, 14) espacées, entre lesquelles le ou les éléments (s) de couplage (8) sur la pièce de couplage (5) peut passer dans la position de déblocage de la pièce de blocage (6).

3. Dispositif de levier (1) selon l'une des revendications précédentes, **caractérisé en ce que** le ou les élément (s) de couplage (8) de la pièce de couplage (5) est ou sont formé (s) en tant qu'avancée ou avancées.

4. Dispositif de levier (1) selon l'une des revendications précédentes, **caractérisé en ce que** le ou les élément (s) de couplage (8) de la pièce de couplage (5) s'avance ou s'avancent essentiellement radialement par rapport à l'arbre d'actionnement (2).

5. Dispositif de levier (1) selon l'une des revendications précédentes, **caractérisé en ce que** la pièce de couplage (5) présente plusieurs éléments de couplage (8), sachant que chaque élément de couplage (8) de la pièce de couplage (5) peut être mis en prise avec l'élément de couplage (12) de la pièce de blocage (6).

6. Dispositif de levier (1) selon revendication 5, **caractérisé en ce que** les éléments de couplage (8) de la pièce de couplage (5) sont placés sur une voie circulaire autour de l'arbre d'actionnement (2).

7. Dispositif de levier (1) selon l'une des revendications précédentes, **caractérisé en ce que** la pièce de couplage (5) est exécutée en tant que disque en segment de cercle et est positionnée de telle manière que son centre de cercle se trouve sur l'axe longitudinal de l'arbre d'actionnement (2).

8. Dispositif de levier (1) selon revendication 7, **caractérisé en ce que** le ou les élément (s) de couplage (8) de la pièce de couplage (5) est ou sont prévu (s) sur le bord extérieur du disque en segment de cercle..

9. Dispositif de levier (1) selon revendication 7 ou 8, **caractérisé en ce que** le disque en segment de cercle (5) est positionné de telle manière que son plan de disque est aligné verticalement par rapport à l'axe longitudinal de l'arbre d'actionnement (2).

10. Dispositif de levier (1) selon l'une des revendications précédentes, **caractérisé en ce que** la pièce de couplage (5) est placée sur le levier d'actionnement (3).

11. Vanne hydraulique avec un levier d'actionnement (1) pour l'actionnement de la vanne hydraulique, **caractérisée en ce que** le dispositif de levier (1) est formé selon l'une des revendications précédentes.
